# EUROPEAN PATENT SPECIFICATION

(11) **EP 1 595 431 B1**
(45) Date of publication and mention of the grant of the patent: **18.08.2010**
(21) Application number: 04708528.7
(22) Date of filing: 05.02.2004
(51) Int. Cl.: H05C 1/04, A01K 3/00

(54) **AN ASSEMBLY FOR THE CONTROL OF FENCELINE ELECTRICAL PARAMETERS**
BAUGRUPPE ZUR STEUERUNG VON ELEKTRISCHEN ABGRENZUNGSPARAMETERN
ENSEMBLE POUR LA COMMANDE DE PARAMETRES ELECTRIQUES D'UNE CLOTURE ELECTRIQUE

(30) Priority: 05.02.2003 NZ 52406003
(43) Date of publication of application: 16.11.2005
(73) Proprietor: Gallagher Group Limited, Hamilton 2001 (NZ)
(72) Inventor: JOHNSTON, Richard, Lloyd, Hamilton 2001 (NZ)
(74) Representative: Wilson Gunn
(86) International application number: PCT/NZ2004/000024
(87) International publication number: WO 2004/070149

(56) References cited:
- EP-A- 0 543 621
- WO-A-00/11918
- WO-A-00/35253
- WO-A-88/10059
- WO-A-95/18520
- WO-A-96/36203
- WO-A2-01/84892
- DE-A1- 2 847 993
- FR-A- 2 628 591
- US-A1- 2002 033 756
- DATABASE WPI Week 199719, Derwent Publications Ltd., London, GB; Class X25, AN 1997-210951, XP008093299 & NZ 270 570 A (PEL IND LTD) 24 March 1997
- DATABASE WPI Week 200156, Derwent Publications Ltd., London, GB; Class U22, AN 2001-504660, XP008093300 & IE 81 283 B3 (TEKELEK EURO LTD) 23 August 2000

## Description

### TECHNICAL FIELD

This invention relates to an assembly for the control of fenceline electrical parameters on electric fence systems, in particular to systems containing valuable animals or that may be touched by people.

### BACKGROUND ART

The electric fence industry is highly competitive. In this competitive market, the perception is the more powerful the energiser, the better the energiser. An energiser that has a greater shock effect, while still adhering to the regulations placed on the various electrical parameters associated with electric fences, are the most desirable. Consequently, more powerful energisers are being produced.

The reasons for more powerful energisers being more marketable, are that there is a perception less fenceline maintenance is required, and the energiser will deliver a more powerful shock despite a poorly maintained fence; a more powerful energiser will deliver a more powerful shock over a greater distance with a well maintained fence; and a more powerful energiser will electrify, or protect, a fence covering a greater land area. Often, a degradation of pulse strength occurs due to environmental conditions.

Such environmental conditions can include the earthing of the electric fence system by the conductive wires coming in contact with grass and weeds. Therefore a consumer must control the height of the weeds and grass surrounding an electric fence or along its length. This involves increased costs due to labour, sprays and so forth.

Similarly, the degradation of the elements of an electrically efficient fence has a greater negative effect on the effectiveness of an electric fence system with a lower power energiser, than a high power energiser. A powerful energiser may still deliver an effective shock along the conductive length despite conductive degradation. There is also a trend towards having large and longer fence systems in farms. Therefore, a more powerful energiser is required to send an effective pulse along the entire system.

Electric fences are usually set up to enclose animals or prevent them from leaving or entering a particular area.

However, problems can arise. For instance when bulls fight they can become extremely tired and exhausted after fighting with other bulls or from any other physical exertion.

Their exhaustion is such that they may be unable to easily remove themselves from their contact with an electric fence. This can lead to the bulls receiving multiple shocks from the fence, which can prove fatal.

Alternatively animals can also become entangled in the fence in some other way, for example, an animal may become cast; it may get trapped in a drain, or caught in rails and become entangled with an (offset) electric wire, or fence, and so forth.

The financial cost to the farmer when a bull or other prized animal is killed is substantial. Some animals are worth in the order of hundreds of thousands of dollars and are worth a great deal of money for breeding applications. The loss of one of these animals could potentially mean the end of a breeding line.

This also applies to the horse breeding industry, particularly thoroughbred stallions, proven raced mares which become brood mares, or any other animals having a rarity value whether this be genetic; or the scarcity value of an endangered species. There is also the risk of a person, particularly a young child, becoming effectively entrapped in the fence due to repeated shocks.

It is extremely important therefore, to protect and ensure the safety of bulls, and other valuable animals, including humans, which may become entangled and incapacitated. Such accidents can also happen to other animals which may become lame or for some other reason become stuck against an electric fence - which will led to multiple shocks that could prove fatal. For example, animals panicked by loud noises, children, running dogs, noisy machinery and so forth.

Another very serious problem with the use of high power energisers is that people can come into contact with a fenceline and receive a significant shock. This can have particular relevance to children.

A review of electric fence fatalities highlighted the problem with children coming into contact with electric fences as they are likely (due to their physical size) to receive a "head" shock.

It is generally accepted that the cause of "single shock" fatalities is ventricular fibrillation.

It is also generally accepted that headshocks could result in unconsciousness and subsequent collapse onto the fence resulting in a fatality from repeated shocks - in effect the same mechanism as entanglement.

Unsupervised young children therefore may be at risk of becoming entrapped in an electric fence due to disablement from repeated head or other shocks.

However, it is a fact of life that children may be in close proximity to electric fences, and that certain areas of fenceline (around housed animals, enclosures, near farm buildings, pet enclosures, schools, parks and domestic pet fence installations, etc.) are more likely than others to be a possible danger to children.

The use of electric fencing has many benefits to the farmer but as the foregoing shows, they can have deadly effects for entangled or tired animals or children. WO 96/36203 discloses an energiser for an electric fence for controlling livestock or the like and includes output voltage sensing means. By switching to extra storage capacitance and/or altering the charge voltage the energiser varies the duration of the output pulse and perhaps also the pulse voltage according to the sensed output, thus maintaining an effective livestock barrier and consuming high power only when required. Output pulses are about 8 kV (no load) down to 4 kV (wide range of loads). A control algorithm determines the capacitor charging time and initiates a charge sooner if a higher power pulse is to be delivered, so maintaining a constant pulse rate. The energiser includes a 12V DC power option and has a circuit for synthesising a substantially unipolar pulse having low harmonic content.

WO 00/35253 discloses an electric fence energiser including an energy storage device, the discharge of which provides the output of the energiser, a control unit that can control the output of the energiser, wherein the output of the energiser is a series of pulses, and a sensing means that can relay information to the control circuit regarding the detected electrical load on the output of the electric fence energiser. The energiser output is controlled by the control unit according to the rate of change of the electrical load detected by the sensing means.

It is acknowledged that the term 'comprise' may, under varying jurisdictions, be attributed with either an exclusive or an inclusive meaning. For the purpose of this specification, and unless otherwise noted, the term 'comprise' shall have an inclusive meaning - i.e. that it will be taken to mean an inclusion of not only the listed components it directly references, but also other non-specified components or elements. This rationale will also be used when the term 'comprised' or 'comprising' is used in relation to one or more steps in a method or process.

It is an object of the present invention to address the foregoing problems or at least to provide the public with a useful choice.

Further aspects and advantages of the present invention will become apparent from the ensuing description which is given by way of example only.

### DISCLOSURE OF INVENTION

According to one aspect of the present invention there is provided an electric fence control unit including
an input assembly configured to receive at least one electrical pulse transmitted by an electric fence energiser;
an output control assembly containing a controllable switch configured so as to be able to control the transmission of the at least one electrical pulse from an output of the control unit; and
a sensing assembly that relays information to the output control assembly regarding a detected electrical load on the output of the control unit,
wherein the output control assembly is configured to control the controllable switch in order to prevent the electrical pulse from being conducted to the control unit output when the electrical load deviates outside a predetermined acceptable range.

Characterised in that the input assembly is configured to be connected directly to a first section of an electric fence network, and the control unit output is configured to be connected directly to a second section of the electric fence network.

In some preferred embodiments of the present invention the controllable switch is operated to isolate the control unit output from the electrical pulses.

In some other preferred embodiments of the present invention the controllable switch is operated to shunt the electrical pulses to ground.

Both of the aforementioned configurations will successfully ensure that the electrical pulses will not be conducted to the control unit output once the controllable switch has been operated.

In preferred embodiments of the present invention the power source is a conductor connected to an electrical fence energiser, that is physically separate from the control unit.

In some embodiments of the present invention the control unit may be powered by a rechargeable battery, or solar powered.

In preferred embodiments of the present invention the controllable switch is a bidirectional switch in order that the present invention can be operated with either a positive or negative pulse system.

The controllable switch may be uni-directional.

Also in preferred embodiments of the present invention the input assembly contains a number of impedances that are configured as a energy limiting network that is utilised to lower the input energy from the usual pulse energy from an electric fence energiser to lower pulse energy in order to limit the initial shock felt by the subject (be it an animal or a human) coming into contact with the conductor that is connected to the output of the control unit.

This is an additional safety feature which will reduce the chances of the subject being overcome by the initial shock.

In some embodiments a different output voltage may be used or there may be no voltage divider network fitted.

It is envisaged that in most embodiments the voltage divider network is fixed and cannot be adjusted by the operator.

However it is recognised that in some installations a different output voltage may be desired and therefore the present invention can be fitted with an adjustable voltage divider network in order to accommodate this requirement.

Throughout the present specification the term "output control assembly" should be understood to mean an assembly that monitors the rate of change of the load (for example sudden changes due to animal contact as opposed to gradual changes from increased vegetation loading) as sensed by the sensing assembly and activates the controllable switch if the rate of change is outside of the acceptable range.

Throughout the present specification the term "sensing assembly" should be understood to mean an assembly that determines the rate of change in the load on the control unit output between a reference pulse and the received pulse from the control unit output and passes this information to the output control assembly.

In some preferred embodiments of the present invention the "reference pulse" used by the sensing assembly will generally be the last pulse received by the sensing unit prior to the currently received pulse. This pulse is used to set the "reference threshold".

This type of reference system is able to take into account slow variations in the load due to environmental conditions - such as dew forming, or due to vegetation growth contacting the fenceline.

When the output control unit determines that a fault or a contact has occurred on the fence and operates the controllable switch to ensure no more pulses are present at the output, then the last pulse will not be used as a reference pulse and the previous "good" pulse will be maintained as the reference pulse until the output is once again within the acceptable range. At this point the current pulse will then once again become the reference pulse for the subsequent pulse.

In some other preferred embodiments the "reference threshold" can be an "absolute threshold" that is either set during manufacture or by the initial conditions when the control unit is connected into the electric fence system.

It should be appreciated that throughout preferred embodiments of the present specification the term "the acceptable range" should be understood to mean - the load of a fence operating under its normal operating conditions (with no animal contact).

In a typical case, the application of a load of less than 2000 Ohms (for example 1000 Ohms or 500 Ohms) would be adequate to cause the controllable switch to operate and prevent the electrical pulse from passing to the output (out onto the fenceline) .

It should be understood that these figures are given as an example only as in some embodiments a load in excess of 2000 Ohms (e.g. 3000 Ohms) may be adequate to cause the controllable switch to operate.

It is envisaged that in most embodiments of the present invention the load level required to activate the operation of the controllable switch is preset during the manufacture of the control unit, however it should be understood that this level can be adjusted in some embodiments, either by a service technician or in some cases by the operator.

According to another aspect of the present invention there is provided a method of operating an electric fence assembly including an electric fence network having a first section and a second section, an electric fence energiser configured to transmit at least one electrical pulse onto the first section of the electric fence network, and the electric fence control unit according to the first aspect of the invention,
the method characterised by the steps of
a) connecting the input assembly of the control unit to the first section of the electric fence network;
b) connecting the control unit output to the second section of the electric fence network;
c) sensing the electric load on the output of the control unit, and
d) using the controllable switch to ensure that the transmission of the at least one electrical pulse to the control unit output ceases if the sensed electrical load on the output of the control unit is outside the acceptable range on the fenceline.

In preferred embodiments of the present invention the controllable switch is reset after a preset time delay in order that the monitored fenceline is not permanently deactivated. It is envisaged that in some embodiments the controllable switch will have to be manually reset before pulses can be conducted to the control unit output once again.

It should be understood that in some preferred embodiments of the present invention the time delay can be selected by the operator or the manual reset facility may be selected instead.

However in some other preferred embodiments the time delay cannot be adjusted by the operator.

Alternatively the load may be continuously monitored by some means and the controllable switch reset on removal of the load.

In preferred embodiments of the present invention the functions of the electric fence control unit are managed by a programmable device such as a micro-controller or micro-processor.

In some other embodiments the electric fence control unit may be managed using discrete components only.

It should be noted that in this instance the term "discrete components" should be understood to mean any electrical or electronic components that do not require software in order to function.

In some preferred embodiments of the present invention the control assembly incorporates an alarm output in order to alert the owner of the control unit that an out of range rate of change in the electrical load has been detected and that therefore the controllable switch has been operated. This is of particular importance when the controllable switch has to be manually reset.

In preferred embodiment of the present invention the control assembly is configured so that it monitors the number of fault conditions detected by the sensing assembly and if this number reaches a preset threshold value then the control assembly will shut down the output from the control unit until it is manually reset by the operator of the system.

This is to ensure that if an animal or person is entangled within the fence or has lapsed into unconsciousness and remained in contact with the fence, then they will not receive further shocks as this could cause them further injury.

Therefore from the aforegoing description it is clear that the present invention has many advantages over all of the current electric fence systems available.

One significant advantage of the present invention is that it can be connected to a farm fencing system in order to monitor and control a section of the system in order that this section can if required be deactivated without risk of deactivating any other part of the farm electric fence system.

Another significant advantage of the present invention is that due to its low initial shock there is less risk of injury to a person (particularly to a child) or to an animal if they come into contact with the fence.

Another advantage of the present invention is that the fence deactivation period allows an animal or person to get clear of the fence even if they were entangled before the shock pulses are once again resumed.

Another important advantage of the present invention is that due to there being a lower energy initial shock pulse and a deactivation period after a rapid change in load has been detected then an animal or person entangled in the fence or in a condition where it cannot remove itself from contact with the fence (for example if may be too tired or unconscious) is far less likely to suffer any long term damage or significant injury.

### BRIEF DESCRIPTION OF DRAWINGS

Further aspects of the present invention will become apparent from the following description which is given by way of example only and with reference to the accompanying drawings in which:
- Figure 1: is a diagrammatical representation of an existing farm electric fence system with the present invention connected in situ;
- Figure 2: is a diagrammatical representation of one preferred embodiment of the present invention where the controllable switch is a high voltage, in series, normally closed switch, and
- Figure 3: is a diagrammatical representation of another preferred embodiment of the present invention in which the controllable switch is a high power, normally open, shunt to earth.

### BEST MODES FOR CARRYING OUT THE INVENTION

With reference to the figures there is illustrated an assembly for the control of fence line voltage generally indicated by arrow 1.

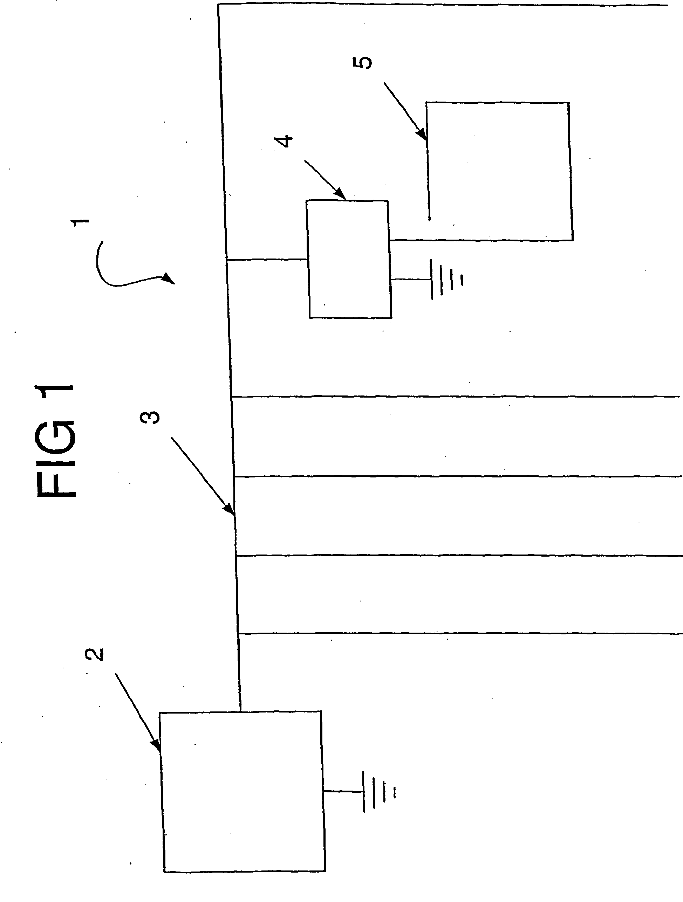

Figure 1 shows a standard electric fence system for use in a large farm complex, the system is powered by a fence energiser (2) the output of which is passed to a conductor network (3).

The control unit (4) is connected to a convenient point on the conductor network (3).

The output of control unit (4) is a conductor (or network of conductors) (5).

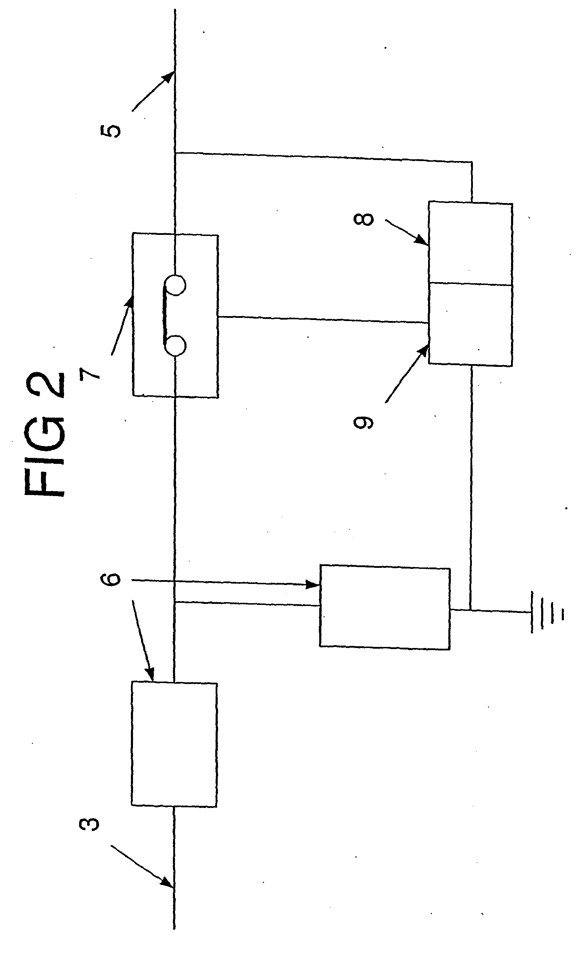

Figure 2 shows a simple block diagram of control unit (4) wherein the input from the existing electric fence (3) is fed into an impedance divider network (6) in order to lower the output voltage to the required level. The impedance divider network can be constructed from resistors, capacitors, inductors or from non-linear devices such as voltage-dependent resistors.

The controllable switch (7) in figure 2 is a normally-closed switch.

The sensing assembly (8) is connected to the output of the controllable switch (7) in order to monitor the load on the low voltage fence line (5). The sensing assembly (8) and the control assembly (9) can be constructed as a single assembly (as shown in the diagram) or they may be constructed as entirely separate assemblies.

The output of the sensing assembly (8) is fed to the control assembly (9) in order that when a "fault" (a fault condition is determined by the sensing assembly when it senses that the load on the low voltage fence line has changed at a rate outside the acceptable limits, as described in the "disclosure of invention" section of this specification) is detected by the sensing assembly (8) then control assembly (9) will operate the controllable switch (7) in order to isolate the low voltage fence line (5) from the output of the impedance divider network (6).

After a preset time delay control assembly (9) will operate controllable switch (7) so as to remake the contact between the low voltage fence line (5) and the output of the divider network (6).

When the next electrical pulse is passed from the existing electric fence (3) to the low voltage fence line (5) the sensing assembly (8) will determine the rate of change in the electrical load on the low voltage fence line (5) from the last received "good" load level before the fault situation occurred.

If the sensing assembly (8) then determines that the rate of change in the load on the low voltage fence line (5) is still outside the acceptable limits then the control assembly (9) will reactivate the controllable switch (7) in order to once again break the contact between the low voltage fence line (5) and the output of the impedance divider network (6).

The control assembly can also activate an alarm circuit (not shown) to inform the operator of the farm system that a fault condition has occurred.

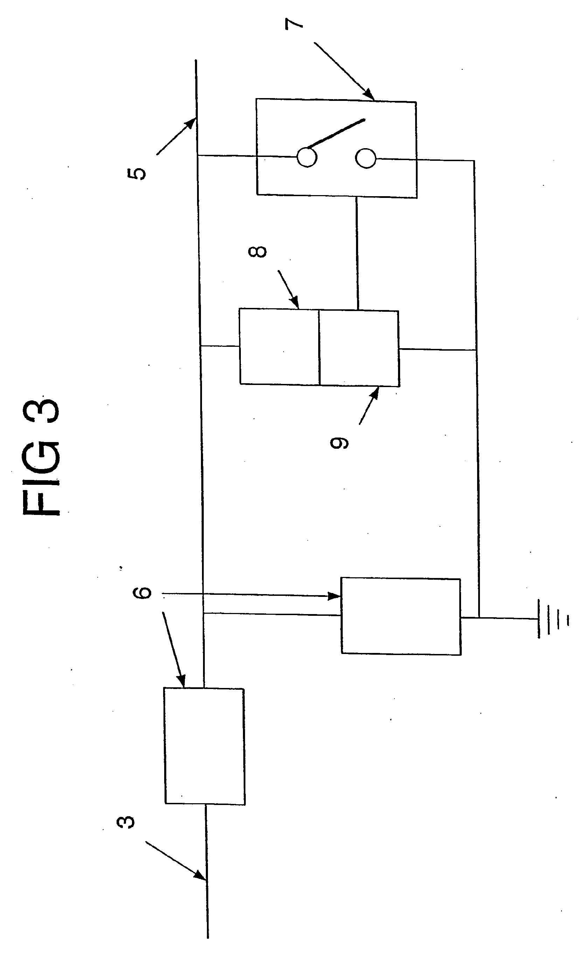

Figure 3 shows an alternative circuit to that in Figure 2 wherein where a fault condition is detected by the sensing assembly (8) the control assembly (9) operates the controllable switch (7) in order that the switch (7) closes and connects the low voltage fence line (5) to ground in order that subsequent pulses are grounded and therefore will not shock the animal or person in contact with the fence (5).

Once again, similar to the circuit of Figure 2, after a preset time delay or a manual reset is received the control assembly will operate the controllable switch in order to allow pulses to once again pass along the low voltage fence line (5).

If the sensing assembly detects that the fault situation persists then once again the control assembly (9) will activate the controllable switch (7) in order to ground the output of the voltage divider (6).

In some systems if the fault situation persists longer than a preset time threshold then the control assembly (9) will hold the controllable switch (7) so that it cannot resume its normal operating position until the whole control unit system (1) is reset by the operator of the system (1).

This is to ensure that an animal or person is entangled within the fence or has lost consciousness then they will not continue to receive shock pulses (even at a much lower rate) as this could cause them further injury.

Aspects of the present invention have been described by way of example only and it should be appreciated that modifications and additions may be made thereto without departing from the scope thereof.

## Claims

1. An electric fence control unit (4) including:
an input assembly configured to receive at least one electrical pulse transmitted by an electric fence energiser;
an output control assembly (9) containing a controllable switch (7) configured so as to be able to control the transmission of the at least one electrical pulse from an output of the control unit (4); and
a sensing assembly (8) that relays information to the output control assembly (9) regarding a detected electrical load on the output of the control unit (4),
wherein the output control assembly (9) is configured to control the controllable switch (7) in order to prevent the electrical pulse from being conducted to the control unit (4) output when the electrical load deviates outside a predetermined acceptable range
**characterised in that**
the input assembly is configured to be connected directly to a first section of an electric fence network, and the control unit (4) output is configured to be connected directly to a second section of the electric fence network.

2. An electric fence control unit (4) as claimed in claim 1 wherein the controllable switch (7) is configured to isolate the control unit (4) output from the electrical pulse received by the input assembly.

3. An electric fence control unit (4) as claimed in claim 1 wherein the controllable switch (7) is configured to shunt the electrical pulse received by the input assembly to ground.

4. An electric fence control unit (4) as claimed in any previous claim wherein the input assembly contains a number of impedances configured as an energy limiter network (6) to lower the input energy into the control unit (4) of the received series of electrical pulses.

5. An electric fence control unit (4) as claimed in claim 4 wherein the output energy level of the energy limiter network (6) is adjustable.

6. An electric fence control unit (4) as claimed in any previous claim wherein the output control assembly (9) is configured to control the controllable switch (7) in order to prevent the electrical pulse from being conducted to the control unit (4) output when the rate of change of the detected electrical load is outside of an acceptable range.

7. An electric fence control unit (4) as claimed in any previous claim wherein the control unit (4) is fitted with an alarm output that is configured to alert the operator of the control unit (4) that an out of predetermined acceptable range change in the electrical load has been detected.

8. A method of operating an electric fence assembly (1) including an electric fence network (3) having a first section and a second section, an electric fence energiser (2) configured to transmit at least one electrical pulse onto the first section of the electric fence network, and the electric fence control unit (4) as claimed in any one of claims 1 to 7
the method **characterised by** the steps of:
a. connecting the input assembly of the control unit (4) to the first section of the electric fence network (3);
b. connecting the control unit (4) output to the second section of the electric fence network (3);
c. sensing the electrical load on the output of the control unit (4), and
d. using the controllable switch (7) to ensure that the transmission of the at least one electrical pulse to the control unit (4) output ceases if the sensed electrical load on the output of the control unit (4) is outside an acceptable range.

9. A method as claimed in claim 8 wherein the controllable switch (7) is used to ensure that the transmission of the electrical pulse to the control unit (4) output ceases when the rate of change of the sensed electrical load is outside of an acceptable range.

10. A method as claimed in claim 9 wherein sensing the electrical load includes the steps of determining the rate of change of the load on the control unit (4) output, between a reference pulse and a received pulse from the control unit (4) output, and passing this information to the output control assembly (9).

11. A method as claimed in claim 10 wherein the reference pulse is the last pulse received by the sensing assembly (8) prior to the currently received pulse, and wherein the reference pulse is configured to set a reference threshold for the sensing assembly (8).

12. A method as claimed in claim 11 including the steps of:
(i) determining that a fault or a contact condition has occurred on the second section of the electric fence network (3);
(ii) operating the controllable switch (7) to ensure no more pulses are present at the output of the control unit (4); and
(iii) having the sensing assembly (8) ignore the last pulse such that the last pulse received before the fault condition will be maintained as the reference pulse until the control unit (4) output returns to a level within the acceptable range.

13. A method as claimed in claim12 including the steps of monitoring the number of fault conditions and shutting down the output from the control unit (4) if the number of fault conditions reaches a preset threshold value.

14. An electric fence assembly (1) including an electric fence network (3) having a first section and a second section, an electric fence energiser (2) configured to transmit at least one electrical pulse onto the first section of the electric fence network (3), and an electric fence control unit (4) as claimed in any one of claims 1 to 7.

## Patentansprüche

1. Steuerungseinheit (4) für einen Elektrozaun umfassend:
eine Eingangs-Baugruppe, die dazu ausgebildet ist, wenigstens einen durch ein Elektrozaungerät (2) gesendeten elektrischen Impuls zu empfangen;
eine Ausgangssteuerungs-Baugruppe (9) umfassend einen steuerbaren Schalter (7), der dazu ausgebildet ist, die Übermittlung des wenigstens einen elektrischen Impulses von einem Ausgang der Steuerungseinheit (4) zu steuern; und
eine Sensor-Baugruppe (8), die Informationen zur Ausgangssteuerungs-Baugruppe (9) betreffend eine am Ausgang der Steuerungseinheit (4) detektierte Last weitergibt,
wobei die Ausgangssteuerungs-Baugruppe (9) dazu ausgebildet ist, den steuerbaren Schalter (7) zu steuern, um eine Leitung des elektrischen Impulses zur Steuerungseinheit (4) zu verhindern, wenn die elektrische Last einen vorgegebenen Akzeptanzbereich verlässt,
**dadurch gekennzeichnet, dass**
die Eingangs-Baugruppe dazu ausgebildet ist, direkt mit einem ersten Abschnitt des Leiternetzes (3) des Elektrozauns (1) verbunden zu werden, und der Ausgang der Steuerungseinheit (4) dazu ausgebildet ist, direkt mit einem zweiten Abschnitt Leiternetzes (3) des Elektrozauns (1) verbunden zu werden.

2. Steuerungseinheit (4) für einen Elektrozaun nach Anspruch 1, **dadurch gekennzeichnet, dass** der steuerbare Schalter (7) dazu ausgebildet ist, den Ausgang der Steuerungseinheit (4) vom durch die Eingangs-Baugruppe empfangenen elektrischen Impuls zu isolieren.

3. Steuerungseinheit (4) für einen Elektrozaun nach Anspruch 1, **dadurch gekennzeichnet, dass** der steuerbare Schalter (7) dazu ausgebildet ist, den durch die Eingangs-Baugruppe empfangenen elektrischen Impuls zur Erde abzuleiten.

4. Steuerungseinheit (4) für einen Elektrozaun nach einem der vorangehenden Ansprüche, **dadurch gekennzeichnet, dass** die Eingangs-Baugruppe eine Anzahl von Impedanzen aufweist, die ein Energiebegrenzernetz (6) bilden, um die Eingangsenergie der in der Steuerungseinheit (4) empfangenen elektrischen Impulse zu verringern.

5. Steuerungseinheit (4) für einen Elektrozaun nach Anspruch 4, **dadurch gekennzeichnet, dass** die Höhe der Ausgangsenergie des Energiebegrenzernetzes (6) einstellbar ist.

6. Steuerungseinheit (4) für einen Elektrozaun nach einem der vorangehenden Ansprüche, **dadurch gekennzeichnet, dass** die Ausgangssteuerungs-Baugruppe (9) dazu ausgebildet ist, den steuerbaren Schalter (7) zu steuern, um eine Weiterleitung eines elektrischen Impulses zum Ausgang der Steuerungseinheit (4) zu verhindern, wenn die Änderungsrate der detektierten elektrischen Last außerhalb eines akzeptablen Bereichs liegt.

7. Steuerungseinheit für einen Elektrozaun nach einem der vorangehenden Ansprüche, **dadurch gekennzeichnet, dass** die Steuerungseinheit (4) einen Alarmausgang aufweist, der dazu ausgebildet ist, einen Bediener der Steuerungseinheit (4) zu alarmieren, dass eine Änderungsrate der elektrischen Last außerhalb eines vorgegebenen akzeptablen Bereichs detektiert wurde.

8. Verfahren zum Betrieb einer Elektrozaunanordnung (1) umfassend ein Elektrozaunnetzwerk (3) mit einem ersten und einem zweiten Abschnitt, ein Elektrozaungerät (2), das dazu ausgebildet ist, wenigstens einen elektrischen Impuls auf den ersten Abschnitt des Elektrozaunnetzwerk (3) zu übertragen und eine Steuerungseinheit (4) für den Elektrozaun nach den Ansprüchen 1 bis 7, wobei das Verfahren die Schritte aufweist:
a. Verbinden der Eingangs-Baugruppe der Steuerungseinheit (4) mit dem ersten Abschnitt des Elektrozaunnetzwerks (3);
b. Verbinden des Ausgangs der Steuerungseinheit (4) mit dem zweiten Abschnitt des Leiternetzes (3);
c. Abtasten der elektrischen Last auf dem Ausgang der Steuerungseinheit (4); und
d. Verwendung des steuerbaren Schalters (7), um sicherzustellen, dass die Übermittlung des wenigstens einen elektrischen Impulses zum Ausgang der Steuerungseinheit (4) beendet wird, wenn die gemessene elektrische Last auf dem Ausgang der Steuerungseinheit (4) außerhalb eines akzeptablen Bereichs liegt.

9. Verfahren nach Anspruch 8, **dadurch gekennzeichnet, dass** der steuerbare Schalter (7) verwendet wird um sicherzustellen, dass die Übermittlung eines elektrischen Impulses zum Ausgang der Steuerungseinheit (4) beendet wird wenn die Änderungsrate der gemessenen elektrischen Last außerhalb eines akzeptablen Bereichs liegt.

10. Verfahren nach Anspruch 9, **dadurch gekennzeichnet, dass** die Messung der elektrischen Last die Schritte
- Bestimmung der Änderungsrate der Last auf dem Ausgang der Steuerungseinheit (4) zwischen einem Referenzimpuls und einem von der Steuerungseinheit (4) empfangenen Impuls und
- Weitergabe dieser Information an die Ausgangssteuerungs-Baugruppe (9).

11. Verfahren nach Anspruch 10, **dadurch gekennzeichnet, dass** der Referenzimpuls der letzte von der Sensor-Baugruppe (8) empfangene Impuls vor dem aktuell empfangenen Impuls ist, wobei der Referenzimpuls dazu ausgebildet ist einen Referenzschwellwert für die Sensor-Baugruppe (8) festzulegen.

12. Verfahren nach Anspruch 11, umfassend die Schritte:
(i) Feststellung, dass eine Fehler- oder eine Kontaktbedingung am zweiten Abschnitt des Elektrozaunnetzwerks (3) erfolgt ist;
(ii) Steuerung des steuerbaren Schalters (7) um sicherzustellen, dass keine elektrischen Impulse am Ausgang der Steuerungseinheit (4) vorhanden sind; und
(iii) Ignorierung des letzten Impulses durch die Sensor-Baugruppe (8), so dass der letzte vor der Fehlerbedingung empfangene Impuls als Referenzimpuls verwendet wird, bis der Ausgang der Steuerungseinheit (4) zu einem Wert innerhalb des akzeptablen Bereichs zurückkehrt.

13. Verfahren nach Anspruch 12 umfassend die Schritte
- Aufzeichnung der Anzahl der Fehlerbedingungen
- Herunterfahren des Ausgangs der Steuerungseinheit (4), falls die Anzahl der Fehlerbedingungen einen vorgegebenen Schwellwert überschreitet.

14. Elektrozaunanordnung (1) umfassend ein Elektrozaunnetzwerk (3) mit einem ersten und einem zweiten Abschnitt, einem Elektrozaungerät (2), das dazu ausgebildet ist, wenigstens einen elektrischen Impuls auf den ersten Abschnitt des Elektrozaunnetzwerks (3) zu übertragen und eine Steuerungseinheit (4) für einen Elektrozaun nach einem der Ansprüche 1 bis 7.

## Revendications

1. Unité de commande de clôture électrique (4) comprenant :
un ensemble d'entrée configuré de manière à recevoir au moins une impulsion électrique transmise par un activateur de clôture électrique ;
un ensemble de commande de sortie (9) qui contient un commutateur pouvant être commandé (7) configuré de manière à pouvoir commander la transmission de la ou des impulsions électriques en provenance d'une sortie de l'unité de commande (4) ; et
un ensemble de détection (8) qui relaie des informations qui concernent une charge électrique détectée sur la sortie de l'unité de commande (4), vers l'ensemble de commande de sortie (9) ;
dans laquelle l'ensemble de commande de sortie (9) est configuré de manière à commander le commutateur pouvant être commandé (7) de façon à empêcher l'acheminement de l'impulsion électrique vers la sortie de l'unité de commande (4) lorsque la charge électrique s'écarte d'une plage acceptable prédéterminée ;
**caractérisée en ce que :**
l'ensemble d'entrée est configuré de manière à être connecté directement à une première section d'un réseau de clôture électrique, et la sortie de l'unité de commande (4) est configurée de manière à être connectée directement à une deuxième section du réseau de clôture électrique.

2. Unité de commande de clôture électrique (4) selon la revendication 1, dans laquelle le commutateur pouvant être commandé (7) est configuré de manière à isoler la sortie de l'unité de commande (4) de l'impulsion électrique reçue par l'ensemble d'entrée.

3. Unité de commande de clôture électrique (4) selon la revendication 1, dans laquelle le commutateur pouvant être commandé (7) est configuré de manière à dériver à la terre l'impulsion électrique reçue par l'ensemble d'entrée.

4. Unité de commande de clôture électrique (4) selon l'une quelconque des revendications précédentes, dans laquelle l'ensemble d'entrée contient un certain nombre d'impédances configurées sous la forme d'un réseau de limitation d'énergie (6) de manière à abaisser l'énergie d'entrée des séries d'impulsions électriques reçues dans l'unité de commande (4).

5. Unité de commande de clôture électrique (4) selon la revendication 4, dans laquelle le niveau d'énergie de sortie du réseau de limitation d'énergie (6) est réglable.

6. Unité de commande de clôture électrique (4) selon l'une quelconque des revendications précédentes, dans laquelle l'ensemble de commande de sortie (9) est configuré de manière à commander le commutateur pouvant être commandé (7) de façon à empêcher l'acheminement de l'impulsion électrique vers la sortie de l'unité de commande (4) lorsque la vitesse de variation de la charge électrique détectée se situe en dehors d'une plage acceptable.

7. Unité de commande de clôture électrique (4) selon l'une quelconque des revendications précédentes, dans laquelle l'unité de commande (4) est dotée d'une sortie d'alarme qui est configurée de manière à alerter l'activateur de l'unité de commande (4) qu'une variation de la charge électrique en dehors d'une plage acceptable prédéterminée, a été détectée.

8. Procédé d'actionnement d'une clôture électrique (1) comprenant un réseau de clôture électrique (3) qui présente une première section et une deuxième section, un dispositif d'excitation de clôture électrique (2) configuré de manière à transmettre au moins une impulsion électrique à la première section du réseau de clôture électrique, et l'unité de commande de clôture électrique (4) selon l'une quelconque des revendications 1 à 7 ;
le procédé étant **caractérisé par** les étapes consistant à :
a. connecter l'ensemble d'entrée de l'unité de commande (4) à la première section du réseau de clôture électrique (3) ;
b. connecter la sortie de l'unité de commande (4) à la deuxième section du réseau de clôture électrique (3) ;
c. détecter la charge électrique sur la sortie de l'unité de commande (4) ; et
d. utiliser le commutateur pouvant être commandé (7) de manière à s'assurer que la transmission de la ou des impulsions électriques vers la sortie de l'unité de commande (4) cesse si la charge électrique détectée sur la sortie de l'unité de commande (4) se situe en dehors d'une plage acceptable.

9. Procédé selon la revendication 8, dans lequel le commutateur pouvant être commandé (7) est utilisé de manière à s'assurer que la transmission de l'impulsion électrique vers la sortie de l'unité de commande (4) cesse lorsque la vitesse de variation de la charge électrique détectée se situe en dehors d'une plage acceptable.

10. Procédé selon la revendication 9, dans lequel la détection de la charge électrique comprend les étapes consistant à déterminer la vitesse de variation de la charge sur la sortie de l'unité de commande (4), entre une impulsion de référence et une impulsion reçue en provenance de la sortie de l'unité de commande (4), et à transmettre ces informations à l'ensemble de commande de sortie (9).

11. Procédé selon la revendication 10, dans lequel l'impulsion de référence est la dernière impulsion reçue par l'ensemble de détection (8) avant l'impulsion actuellement reçue, et dans lequel l'impulsion de référence est configurée de manière à fixer un seuil de référence pour l'ensemble de détection (8).

12. Procédé selon la revendication 11, comprenant les étapes consistant à :
(i) déterminer qu'un état de défaut ou de contact s'est produit sur la deuxième section du réseau de clôture électrique (3) ;
(ii) actionner le commutateur pouvant être commandé (7) de manière à s'assurer que plus aucune impulsion n'est présente au niveau de la sortie de l'unité de commande (4) ; et
(iii) faire en sorte que l'ensemble de détection (8) ignore la derrière impulsion de telle sorte que la dernière impulsion reçue avant l'état de défaut, soit maintenue en tant qu'impulsion de référence jusqu'à ce que la sortie de l'unité de commande (4) retienne à un niveau qui se situe à l'intérieur de la plage acceptable.

13. Procédé selon la revendication 12, comprenant les étapes consistant à surveiller le nombre d'états de défaut et à arrêter la sortie en provenance de l'unité de commande (4) si le nombre d'états de défaut atteint une valeur de seuil préréglée.

14. Ensemble de clôture électrique (1) comprenant une réseau de clôture électrique (3) qui présente une première section et une deuxième section, un dispositif d'excitation de clôture électrique (2) configuré de manière à transmettre au moins une impulsion électrique à la première section du réseau de clôture électrique (3), et une unité de commande de clôture électrique (4) selon l'une quelconque des revendications 1 à 7.
